# FASCICULE DE BREVET EUROPEEN

(11) **EP 2 928 350 B1**
(45) Date de publication et mention de la délivrance du brevet: **20.07.2016**
(21) Numéro de dépôt: 13801675.3
(22) Date de dépôt: 15.11.2013
(51) Int. Cl.: A47J 36/02

(54) **ARTICLE CULINAIRE MUNI D'UN FOND COMPORTANT UN MATÉRIAU À BAS POINT DE CURIE**
KOCHGEFÄSS MIT EINEM BODEN AUS EINEM MATERIAL MIT GERINGEM CURIEPUNKT
COOKING VESSEL PROVIDED WITH A BASE COMPRISING A LOW CURIE POINT MATERIAL

(30) Priorité: 05.12.2012 FR 1261636
(43) Date de publication de la demande: 14.10.2015
(73) Titulaire: SEB S.A., 69130 Ecully (FR)
(72) Inventeur: CUILLERY, Pascal, 74210 Faverges (FR); HOFLEITNER, Céline, 74000 Annecy (FR)
(74) Mandataire: Bourrières, Patrice
(86) Numéro de dépôt international: PCT/FR2013/052757
(87) Numéro de publication internationale: WO 2014/087063

(56) Documents cités:
- EP-A2- 1 841 289
- US-A1- 2005 064 219

## Description

La présente invention concerne un article culinaire destiné à être utilisé avec un appareil de chauffage par induction pour la cuisson d'aliments notamment une poêle, une casserole, une sauteuse, un faitout ou un autocuiseur.

Plus particulièrement, l'invention concerne un article culinaire destiné à être utilisé avec un appareil de chauffage par induction pour la cuisson d'aliments à une température déterminée.

On connaît du document FR2527916 un article culinaire destiné à être utilisé avec un appareil de chauffage par induction. L'article comporte une calotte munie d'un fond comprenant une plaque en matériau ferromagnétique présentant une température de Curie prédéterminée pour faire découpler l'appareil de chauffage par induction, une fois que la température de ce point de Curie est atteinte à l'endroit du matériau ferromagnétique. Par découpler, on comprend que l'appareil de chauffage ne génère plus de puissance de chauffe dans l'article culinaire.

Un tel article culinaire utilisé avec un appareil de chauffage par induction permet d'obtenir un fond dont la température est régulée à une température sensiblement égale la température de Curie. En effet, une fois que la température de Curie est atteinte, le matériau ferromagnétique perd ses propriétés magnétiques, l'appareil de chauffage par induction découple et ne génère plus de puissance dans le fond de l'article culinaire. La température dans le matériau ferromagnétique va alors baisser jusqu'à ce qu'il retrouve suffisamment ses propriétés magnétiques pour permettre à nouveau le couplage avec l'appareil de chauffage. Ainsi, on peut préparer des aliments à une température de cuisson déterminée par la température de Curie, adaptée à la cuisson de l'aliment.

Cependant, le matériau ferromagnétique présentant une température de Curie prédéterminée est constitué d'un alliage spécifique dont le cout est élevé. Ainsi, un article culinaire dont le fond est couvert par une plaque d'un tel alliage est très cher.

De plus, avec certains appareils de chauffage par induction du commerce, un article culinaire tel que décrit dans le document FR2527916 qui présente un fond couvert par une plaque d'un alliage ferromagnétique à température de Curie déterminée peut entrainer un arrêt de l'appareil. En effet, une fois que la température de Curie est atteinte et que le matériau ferromagnétique perd ses propriétés magnétiques, l'appareil de chauffage par induction interprète ce phénomène comme le retrait de l'article culinaire et se met en sécurité. Pour continuer la cuisson, il faut redémarrer l'appareil de chauffage.

Le document US-A-2005/0064219 décrit, un article culinaire selon le préambule de la revendication indépendante 1.

Le but de la présente invention est de remédier aux inconvénients précités et de proposer un article culinaire destiné à être utilisé avec un appareil de chauffage par induction pour la cuisson d'aliments à une température déterminée qui soit de conception simple et économique à mettre en oeuvre.

Un autre but de l'invention est de proposer un article culinaire destiné à être utilisé avec un appareil de chauffage par induction pour la cuisson d'aliments à une température déterminée qui soit compatible avec les appareils de chauffage par induction du commerce pour permettre un fonctionnement fiable.

Ces buts sont atteints avec un article culinaire destiné à être utilisé avec un appareil de chauffage par induction, ledit article comportant une calotte munie d'un fond comprenant un matériau ferromagnétique présentant une température de Curie prédéterminée, caractérisé en ce que le fond comporte un deuxième matériau ferromagnétique présentant une température de Curie plus élevée, ledit fond étant adapté pour que l'appareil de chauffage en fonctionnement génère une puissance de chauffe permettant de porter la température du fond de l'article culinaire à une température maximale proche de la température de Curie du premier matériau.

Un article culinaire muni d'un tel fond comprenant un matériau ferromagnétique présentant une température de Curie prédéterminée et un deuxième matériau ferromagnétique présentant une température de Curie plus élevée permet d'obtenir un fond adapté à réguler à une température proche de la température de Curie du premier marériau lorsque l'on place l'article culinaire sur un appareil de chauffage à induction, l'appareil étant réglé sur une position de thermostat suffisante.

Par «proche de la température de Curie du premier matériau », on comprend que la température atteinte par le fond sera comprise dans une fourchette de plus ou moins 15 % de la température de Curie du premier matériau.

Le premier matériau ferromagnétique cher qui définit la température de régulation de l'article culinaire autour de sa température de Curie est mis en oeuvre en quantité minimum. Cette quantité minimum est adapté pour permettre à l'appareil de chauffage de générer une puissance de chauffe suffisante dans le fond pour obtenir une bonne montée en température de l'article culinaire lorsque celui-ci contient des aliments à cuire.

Le deuxième matériau est mis en oeuvre en quantité maximum. Cette quantité a été définie sur des articles culinaires avec un fond ajouré mais sans le premier matériau ferromagnétique dans la partie ajourée, de manière à ce qu'on obtienne la quantité maximale de deuxième matériau qui ne soit pas détecté par la plaque à induction.

Avantageusement, le deuxième matériau ferromagnétique est constitué par un acier inoxydable dont la température de Curie est supérieure à 600°C.

Par une telle définition on comprend que le deuxième matériau ferromagnétique est un acier inoxydable standard du commerce, qui est très économique notamment par rapport au premier ferromagnétique. Ainsi on obtient un article culinaire de construction très économique.

De préférence, le premier matériau ferromagnétique présente une surface externe S1, le deuxième matériau ferromagnétique présente une surface externe S2 et le rapport entre S1 et S2 est compris entre 1,1 et 2,7, de préférence entre 1,1 et 2.

Les essais réalisés par la demanderesse ont mis en évidence que la surface est un paramètre qui permet de dimensionner les premier et deuxième matériaux magnétiques.

Cette disposition permet d'obtenir la régulation de chauffe souhaitée en fonction des différentes tailles de fond d'article culinaire.

De préférence, le premier matériau ferromagnétique est agencé au centre du fond.

Cette disposition permet de réaliser un fond économique. En effet, le premier matériau ferromagnétique étant généralement issu d'une découpe à partir d'un rouleau de tôle, il est facile de limiter les chutes de découpe avec une forme « pleine », contrairement à la partie externe du fond où il est nécessaire de découper la partie centrale qui est généralement rebutée, donc non valorisée. Le matériau le moins couteux est dont réservé à la partie externe du fond et le matériau le plus couteux à la partie centrale du fond.

Avantageusement, le premier matériau ferromagnétique et le deuxième matériau ferromagnétique présente une épaisseur sensiblement constante comprise entre 0,3 et 1 millimètre.

De préférence, le premier et le deuxième matériau ferromagnétique sont assemblés par soudure.

Avantageusement, la température de Curie du premier matériau ferromagnétique est comprise entre 60 et 300°C.

La demanderesse a mis en évidence qu'un tel article culinaire permet un mode de cuisson préservant les propriétés nutritionnelles de l'aliment.

Avantageusement, le premier matériau ferromagnétique présente une forme de disque -et le deuxième matériau ferromagnétique présente une forme de couronne.

Cette disposition permet d'obtenir une forme de fond adaptée à des articles culinaires qui sont de forme généralement circulaire.

De préférence, le disque a un diamètre compris entre 160 et 170 millimètres et la couronne a un diamètre extérieur de 200 millimètres.

Cette disposition permet d'obtenir un fond adapté à un article culinaire de taille moyenne, par exemple une poêle dont la calotte présente une ouverture de diamètre de 260 millimètres.

Avantageusement, le premier matériau présente une forme carrée et le deuxième matériau présente une forme de couronne avec une découpe centrale carrée.

Cette disposition permet de produire de façon économique le fond. En effet, le premier matériau ferromagnétique étant issu d'une découpe à partir d'un rouleau de tôle, il est facile de limiter les chutes de découpe avec une forme carrée.

De préférence, l'article culinaire est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue schématique en perspective d'un article culinaire selon un mode particulier de réalisation de l'invention.
- La figure 2 illustre une vue en coupe de l'article culinaire illustré à la figure 1.
- La figure 3 illustre une vue schématique en perspective de l'article culinaire illustré à la figure 1 dont le fond est muni d'un premier matériau ferromagnétique présentant une forme de carré.

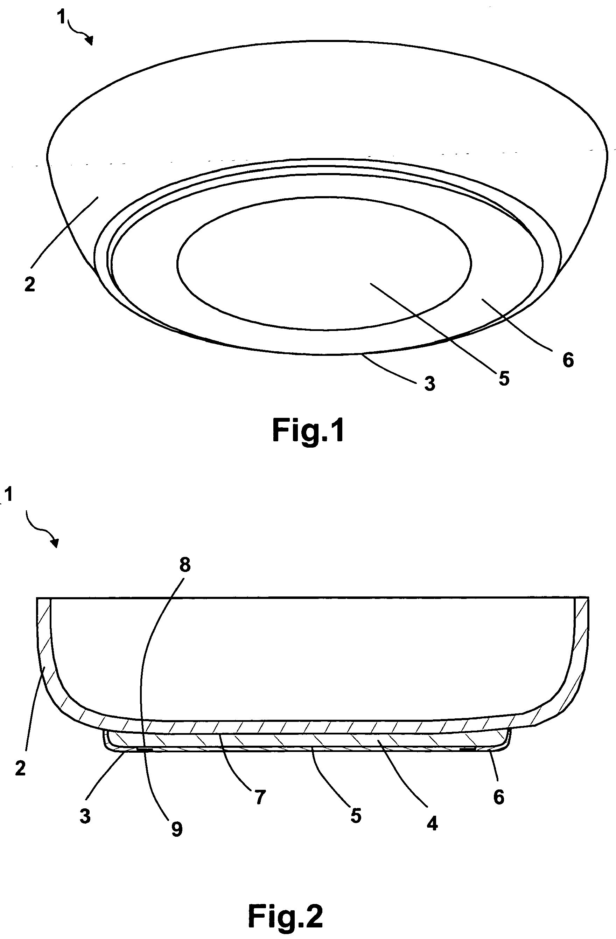

Selon un mode de réalisation visible aux figures 1 et 2, un article culinaire, constitué par une poêle 1, comporte une calotte 2 et un fond 3. Le fond 3 comprend un insert 4 en aluminium, un premier matériau 5 ferromagnétique présentant une forme de disque et un deuxième matériau 6 ferromagnétique présentant une forme de couronne. L'insert 4 est agencé entre une face inférieure 7 de la calotte 2 et les premier et deuxième matériaux 5, 6 ferromagnétiques.

Le premier matériau 5 ferromagnétique et le deuxième matériau 6 ferromagnétique sont assemblés de préférence par soudure pour former un sous ensemble qui est fixé sur l'insert 4 par soudure. Le fond 3 est solidarisé à la face inférieure 7 de la calotte 2 par frappe à chaud.

Pour faciliter la réalisation de la soudure, le disque et la couronne peuvent présenter un épaulement 8, 9 respectivement sur le diamètre extérieur du disque et sur le diamètre interne de la couronne. Ainsi, le sous ensemble réalisé par les premier et deuxième matériaux 5, 6 ferromagnétiques présente une épaisseur constante.

Dans une réalisation particulière, la poêle 1 présente un diamètre extérieur de 260 millimètres. Le premier matériau 5 ferromagnétique présente une température de Curie prédéterminée de 200°C et prend la forme d'un disque de diamètre 160 millimètres et d'épaisseur 0,6 millimètre. Le deuxième matériau 6 ferromagnétique est un acier inoxydable standard du type AISI 430 suivant la norme américaine. Le deuxième matériau 6 ferromagnétique prend la forme d'une couronne de diamètre intérieur de 160 millimètres, de diamètre extérieur de 200 millimètres et d'épaisseur 0,6 millimètre. Le premier matériau 5 ferromagnétique présente une surface externe S1 et le deuxième matériau 6 ferromagnétique présente une surface externe S2. Le rapport entre S1 et S2 est de 1,7.

La demanderesse a mis en évidence qu'en diminuant l'épaisseur des premier et deuxième matériaux 5, 6 ferromagnétiques, on pouvait diminuer ce rapport entre S1 et S2. Par exemple, pour une épaisseur de 0,4 millimètre, le rapport entre S1 et S2 peut être d'environ 1,2.

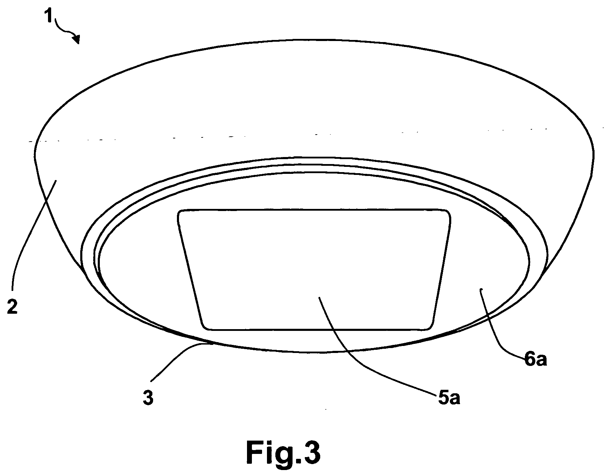

Selon un autre mode de réalisation visible à la figure 3, la poêle 1 comporte un fond 3 comprenant un premier matériau 5a ferromagnétique présentant une forme de plaque carrée de 140 millimètres de coté et un deuxième matériau 6a ferromagnétique présentant une forme de couronne de diamètre extérieur de 200 millimètres avec une découpe centrale carrée de 140 millimètres de coté.

En fonctionnement, l'utilisateur place la poêle 1 sur un appareil de chauffage par induction comportant un inducteur et un dispositif de commande (non représenté sur les figures). L'utilisateur démarre le chauffage à l'aide du dispositif de commande. Ainsi, l'inducteur fournit un champ magnétique qui génère une puissance de chauffe dans les premier et deuxième matériaux (5, 5a, 6, 6a) ferromagnétiques. Au fur et à mesure que la température s'élève dans le fond 3 de la poêle et s'approche de 200°C, le premier matériau 5, 5a ferromagnétique perd ses propriétés magnétiques et l'inducteur ne génère plus alors qu'une puissance de chauffe réduite au deuxième matériau 6, 6a ferromagnétique, faisant que la température du fond 3 va baisser. Après une baisse de température comprise entre 20 et 30°C, le premier matériau 5, 5a ferromagnétique retrouve suffisamment ses propriétés magnétiques pour que l'inducteur génère à nouveau une puissance de chauffe dans ce premier matériau 5, 5a et ainsi, la température du fond 3 remonte. Un tel fonctionnement permet de réguler la température du fond 3 à la température de Curie du premier marériau 5, 5a avec une variation, par exemple, de plus ou moins 15°C.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, la température de Curie du premier matériau 5, 5a ferromagnétique est de l'ordre de 80°C pour le chauffage du lait ou de l'ordre de 120°C pour la cuisson d'aliments nécessitant une ébullition de l'eau.

Dans une autre variante de réalisation, le fond 3 ne comporte pas d'insert 4. Le premier matériau 5, 5a ferromagnétique et le deuxième matériau 6, 6a ferromagnétique sont assemblés par exemple par frappe sur la face inférieure 7 de la calotte 2 qui est en aluminium.

## Revendications

1. Article (1) culinaire destiné à être utilisé avec un appareil de chauffage par induction, ledit article culinaire (1) comportant une calotte (2) munie d'un fond (3) comprenant un premier matériau (5, 5a) ferromagnétique présentant une température de Curie prédéterminée, le fond (3) comportant un deuxième matériau (6, 6a) ferromagnétique présentant une température de Curie plus élevée, ledit fond (3) étant adapté pour que l'appareil de chauffage en fonctionnement génère une puissance de chauffe permettant de porter la température du fond (3) de l'article culinaire (1) à une température maximale proche de la température de Curie du premier matériau (5, 5a), **caractérisé en ce que** le premier matériau (5, 5a) ferromagnétique présente une surface externe S1, le deuxième matériau (6, 6a) ferromagnétique présente une surface externe S2 et le rapport entre S1 et S2 étant compris entre 1,1 et 2,7, de préférence entre 1,1 et 2.

2. Article culinaire (1) selon la revendication 1, **caractérisé en ce que** le deuxième matériau (6, 6a) ferromagnétique est constitué par un acier inoxydable dont la température de Curie est supérieure à 600°C.

3. Article culinaire (1) selon l'une des revendications 1 à 2, **caractérisé en ce que** le premier matériau (5, 5a) ferromagnétique est agencé au centre du fond (3).

4. Article culinaire (1) selon l'une des revendications 1 à 3, **caractérisé en ce que** le premier matériau (5, 5a) ferromagnétique et le deuxième matériau (6, 6a) ferromagnétique présentent une épaisseur sensiblement constante comprise entre 0,3 et 1 millimètre.

5. Article culinaire (1) selon l'une des revendications 1 à 4, **caractérisé en ce que** le premier matériau (5, 5a) ferromagnétique et le deuxième matériau (6, 6a) ferromagnétique sont assemblés par soudure.

6. Article culinaire (1) selon l'une des revendications 1 à 5, **caractérisé en ce que** la température de Curie du premier matériau (5, 5a) ferromagnétique est compris entre 60 et 300°C.

7. Article culinaire (1) selon l'une des revendications 1 à 6, caractérisé en-ce que le premier matériau (5) ferromagnétique présente une forme de disque et en ce que le deuxième matériau (6) ferromagnétique présente une forme de couronne.

8. Article culinaire (1) selon la revendication 7, **caractérisé en ce que** le disque a un diamètre compris entre 160 et 170 millimètres et la couronne a un diamètre extérieur de 200 millimètres.

9. Article culinaire (1) selon l'une des revendications 1 à 6, caractérisé en ce le premier matériau (5a) présente une forme carrée et le deuxième matériau (6a) présente une forme de couronne avec une découpe centrale carrée.

10. Article culinaire (1) selon l'une des revendications 1 à 9, **caractérisé en ce que** l'article culinaire est une poêle, une casserole, une sauteuse, un faitout ou un autocuiseur.

## Patentansprüche

1. Kochgeschirr (1), das für die Verwendung mit einer Induktionsheizvorrichtung bestimmt ist, wobei das genannte Kochgeschirr (1) eine Kalotte (2) umfasst, die mit einem Boden (3) ausgestattet ist, der ein erstes ferromagnetisches Material (5, 5a) mit einer vorbestimmten Curie-Temperatur aufweist, wobei der Boden (3) ein zweites ferromagnetisches Material (6, 6a) mit einer höheren Curie-Temperatur aufweist, und wobei der genannte Boden (3) dafür ausgelegt ist, dass die Heizvorrichtung während des Betriebs eine Heizleistung erzeugt, mit der die Temperatur des Bodens (3) des Kochgeschirrs (1) auf eine Höchsttemperatur gebracht werden kann, die der Curie-Temperatur des ersten Materials (5, 5a) nahekommt, **dadurch gekennzeichnet, dass** das erste ferromagnetische Material (5, 5a) eine Außenfläche S1 aufweist, das zweite ferromagnetische Material (6, 6a) eine Außenfläche S2 aufweist und das Verhältnis zwischen S1 und S2 zwischen 1,1 und 2,7 und vorzugsweise zwischen 1,1 und 2 beträgt.

2. Kochgeschirr (1) nach Anspruch 1, **dadurch gekennzeichnet, dass** das zweite ferromagnetische Material (6, 6a) aus Edelstahl mit einer Curie-Temperatur über 600 °C besteht.

3. Kochgeschirr (1) nach einem der Ansprüche 1 bis 2, **dadurch gekennzeichnet, dass** das erste ferromagnetische Material (5, 5a) in der Mitte des Bodens (3) angeordnet ist.

4. Kochgeschirr (1) nach einem der Ansprüche 1 bis 3, **dadurch gekennzeichnet, dass** das erste ferromagnetische Material (5, 5a) und das zweite ferromagnetische Material (6, 6a) eine im Wesentlichen konstante Stärke zwischen 0,3 und 1 mm aufweisen.

5. Kochgeschirr (1) nach einem der Ansprüche 1 bis 4, **dadurch gekennzeichnet, dass** das erste ferromagnetische Material (5, 5a) und das zweite ferromagnetische Material (6, 6a) durch Schweißen miteinander verbunden sind.

6. Kochgeschirr (1) nach einem der Ansprüche 1 bis 5, **dadurch gekennzeichnet, dass** die Curie-Temperatur des ersten ferromagnetischen Materials (5, 5a) zwischen 60 und 300 °C beträgt.

7. Kochgeschirr (1) nach einem der Ansprüche 1 bis 6, **dadurch gekennzeichnet, dass** das erste ferromagnetische Material (5) die Form einer Scheibe und das zweite ferromagnetische Material (6) die Form eines Kreisrings aufweist.

8. Kochgeschirr (1) nach Anspruch 7, **dadurch gekennzeichnet, dass** die Scheibe einen Durchmesser zwischen 160 und 170 mm und der Kreisring einen Außendurchmesser von 200 mm aufweist.

9. Kochgeschirr (1) nach einem der Ansprüche 1 bis 6, **dadurch gekennzeichnet, dass** das erste Material (5a) die Form eines Quadrats und das zweite Material (6a) die Form eines Kreisrings mit einem quadratischen zentralen Ausschnitt aufweist.

10. Kochgeschirr (1) nach einem der Ansprüche 1 bis 9, **dadurch gekennzeichnet, dass** es sich bei dem Kochgeschirr um eine Pfanne, eine Kasserolle, einen Schmortopf, einen Kochtopf oder einen Schnellkochtopf handelt.

## Claims

1. Cookware (1) intended to be used with an induction heating appliance, said cookware (1) comprising a bowl (2) fitted with a base (3) consisting of a primary ferromagnetic material (5, 5a) with a pre-established Curie temperature, the base (3) comprising a secondary ferromagnetic material (6, 6a) with a higher Curie temperature, said base (3) having been adapted so that when the heating appliance is in operation it generates a heating power which enables the temperature of the base (3) of the cookware (1) to reach a maximum temperature close to the Curie temperature of the primary material (5, 5a), **characterised in that** the primary ferromagnetic material (5, 5a) has an external surface S1, the secondary ferromagnetic material (6, 6a) has an external surface S2 and the ratio between S1 and S2 being between 1.1 and 2.7, preferably between 1.1 and 2.

2. Cookware (1) according to claim 1, **characterised in that** the secondary ferromagnetic material (6, 6a) is made of stainless steel for which the Curie temperature is above 600 °C.

3. Cookware (1) according to any of claims 1 to 2, **characterised in that** the primary ferromagnetic material (5, 5a) is positioned in the middle of the base (3).

4. Cookware (1) according to any of claims 1 to 3, **characterised in that** the primary ferromagnetic material (5, 5a) and secondary ferromagnetic material (6, 6a) have a relatively constant thickness of between 0.3 and 1 millimetre.

5. Cookware (1) according to any of claims 1 to 4, **characterised in that** the primary ferromagnetic material (5, 5a) and the secondary ferromagnetic material (6, 6a) are assembled by welding.

6. Cookware (1) according to any of claims 1 to 5, **characterised in that** the Curie temperature of the primary ferromagnetic material (5, 5a) is between 60 and 300 °C.

7. Cookware (1) according to any of claims 1 to 6, **characterised in that** the primary ferromagnetic material (5) is in the form of a disc and the secondary ferromagnetic material (6) is in the form of a crown.

8. Cookware (1) according to claim 7, **characterised in that** the disc has a diameter of between 160 and 170 millimetres and the crown has an external diameter of 200 millimetres.

9. Cookware (1) according to any of claims 1 to 6, **characterised in that** the primary ferromagnetic material (5a) is in the form of a square and the secondary ferromagnetic material (6a) is in the form of the crown with a square central cut.

10. Cookware (1) according to any of claims 1 to 9, **characterised in that** the cookware is a frying pan, a saucepan, a sauté pan, a stewpot or a pressure cooker.
